# EUROPEAN PATENT SPECIFICATION

(11) **EP 2 289 787 B1**
(45) Date of publication and mention of the grant of the patent: **02.10.2013**
(21) Application number: 10174171.8
(22) Date of filing: 26.08.2010
(51) Int. Cl.: B62K 11/04, F02M 35/04, F02M 35/10, F02M 35/14, F02M 35/16

(54) **Saddle-ride type vehicle**
Grätschsitz-Fahrzeug
Véhicule du type monté à califourchon

(30) Priority: 28.08.2009 JP 2009197950
(43) Date of publication of application: 02.03.2011
(73) Proprietor: Honda Motor Co., Ltd., Tokyo 107-8556 (JP)
(72) Inventor: Kusano, Takuhei, Saitama 351-0193 (JP); Fujita, Hisayoshi, Saitama 351-0193 (JP)
(74) Representative: Beder, Jens

(56) References cited:
- DE-A1-102005 044 138
- JP-A- 61 255 259
- JP-A- 2004 019 598
- US-A1- 2004 118 362
- US-A1- 2009 049 813

## Description

The present invention relates to a saddle-ride type vehicle including an air cleaner provided with an intake duct.

There have been known saddle-ride type vehicles, such as motorcycles and all-terrain vehicles, including: a main frame extending obliquely rearward and downward from a head pipe; and an air cleaner attached below the main frame (see, for example, Japanese Patent Application Publication No. 2008-261340). For these conventional vehicles, the following structure has been proposed. An intake duct is connected to an upper end of the air cleaner in order to reduce intake noise in the air cleaner, and an outside air is taken in the air cleaner through the intake duct.

However, in the conventional structure, the intake duct extends upward from the upper end of the air cleaner. Accordingly, when the intake duct is desired to be elongated to reduce intake noise, the intake duct needs to be caused to meander in relation with other components such as a handle-bar and a vehicle-body cover located above the air cleaner. As a result, the structure of the intake duct is complicated and the intake resistance thereof is increased.

DE 10 2005 044138 A1 on which the preamble of claim 1 is based, discloses an air filter for a motorcycle that has a cylindrical filter element attached to a plate screwed onto the back of the filter housing. The plate is attached by small screws. The filter has an internal integral forwardly lowered inlet cylinder duct to the engine intakes.

US 2004/118362 A1 discloses an air cleaner and air intake structures for a low-deck vehicle, wherein to secure a large space that can be utilized effectively above an air cleaner, a low-deck vehicle is designed to mount an engine shaped like a letter V in the fore-and-aft direction under a low-deck and an air cleaner. The air cleaner is adapted to be capable of being maintained and inspected from the side of the vehicle. A filter element is provided in the air cleaner, and is attachable and detachable by a lid member on the side of the air cleaner. An inspection lid opposing the lid member is provided on a vehicle body cover covering the air cleaner. A space for arranging vehicle accessories such as a fuel tank is provided above the air cleaner.

US 2009/049813 A1 discloses an engine unit that enhances air intake efficiency of an engine air intake passage for sending air into a transmission case housing a continuously variable transmission. The engine air intake passage supplies air to an engine arranged in a lower portion of a vehicle body. An air cleaner cleans outside air to be sent to the engine air intake passage. A transmission air intake passage sends air into the transmission case. The transmission case is adjacent to the engine in a vehicle width direction. The engine air intake passage extends upward from a front portion of the engine. The transmission air intake passage extends upward from the front portion of the transmission case in the vehicle width direction of the air cleaner and the engine air intake passage.

JP 61 255259 A discloses an air cleaner with the purpose to reduce the unsteady movement of an intake duct by holding said intake duct at two positions in the basic edge part and the nearly center part, in the air cleaner of the engine which is mounted onto a motor-cycle, etc. As for an air cleaner, the basic edge part of an intake duct can be held by the fitting between the fitting part of the intake duct and the inner peripheral edge of the insertion hole of a holding member. Further, the nearly center part of the intake duct can be held by the contact between the outer peripheral surface of the intake duct and the inner peripheral edge of an insertion hole. Therefore, the intake duct can be installed onto a case by the holding member, and the unsteady movement can be suppressed by the insertion hole on the lower case, and therefore, the deformation quantity can be reduced, and the variation of the intake resistance can be suppressed.

JP 2004 019598 A discloses an intake system of a motorcycle of a simple structure for obtaining high silencing effect. This intake system comprises an air cleaner, an intake chamber located on the upstream side thereof, and at least two throttling passages formed in an intake introduction passage from an intake hole of the intake chamber to an intake introduction passage entering the air cleaner via the intake chamber. A part of or the whole part of at least two throttling passages and a part between at least two throttling passages in the intake chamber are provided inside a main frame of a body frame.

The present invention has been made in view of the above-described circumstances. An object of the present invention is to provide a saddle-ride type vehicle in which a long intake duct is disposed linearly in a limited layout space, so that intake noise can be effectively reduced.

### [Means for Solving the Problem]

In order to solve the above described problem, the present invention provides a saddle-ride type vehicle according to claim 1.

The structure may be configured so that the engine includes a cylinder disposed substantially horizontally in such a manner as to extend frontward from a crankcase, and an opening of each intake duct is opened in a space formed between the main frame and the cylinder in a side view. Additionally, in the structure, an upper surface of the air cleaner may be inclined downward as extending away from the main frame in a vehicle-width direction.

Additionally, in the structure, an upper surface of each intake duct may be located below an upper surface of the main frame, and may be inclined downward as extending away from the main frame in a vehicle-width direction.

### [Effects of the Invention]

In the present invention, each intake duct attached to the outside-air inlet of the air cleaner extends linearly, along the main frame, toward the rear of the vehicle, in the space surrounded by the vehicle-body cover, the main frame, and the air cleaner. Accordingly, a long intake duct can be disposed linearly by effectively utilizing the dead space defined by the main frame, the vehicle-body cover, and the air cleaner. As a result, it is possible to simplify the structure of the intake duct and reduce the intake resistance thereof, and to effectively reduce intake noise.

In addition, preferably the engine includes the cylinder disposed substantially horizontally in such a manner as to extend frontward from the crankcase, and the opening of each intake duct is opened in the space formed between the main frame and the cylinder in the side view. Accordingly, the intake duct is opened in the space which is formed between the main frame and the cylinder and which contains a small number of components of the vehicle, and thereby, the intake duct is facilitated to take in an outside air.

Moreover, preferably the upper surface of the air cleaner is inclined downward as the upper surface extends away from the main frame in the vehicle-width direction. Accordingly, a large space surrounded by the vehicle-body cover covering the main frame, the main frame, and the air cleaner can be secured. This makes it possible to form the intake duct with a large diameter to reduce the intake resistance thereof.

Further, preferably the upper surface of each intake duct is located below the upper surface of the main frame, and is inclined downward as the upper surface extends away from the main frame in the vehicle-width direction. Accordingly, the vehicle-body cover can be disposed near the main frame to suppress an increase in size of the vehicle-body cover.

Moreover, the intake duct is provided on each of the left and right sides of the vehicle-body center line. The intake ducts on the left and right sides have different duct lengths from each other. The opening, in the air cleaner, of the connecting tube leading to the throttle body is provided on the side of the vehicle-body center line where the intake duct having a longer duct length is disposed. Accordingly, even when intake noise coming out from the opening of the connecting tube is transmitted, while being not attenuated much in the air cleaner, to the intake duct with the longer duct length on the side close to the opening of the connecting tube, the intake noise can be reduced because of the long duct length. As a result, the amount of intake noise to leak out from the air cleaner can be reduced.

Hereinafter, an embodiment of the present invention will be described with reference to the accompanying drawings.
It should be noted that directions mentioned in the following description, such as front, rear, left, and right, as well as upper and lower, refer to the corresponding directions as viewed from a driver on a vehicle unless otherwise stated. In addition, the arrow F, the arrow R, and the arrow U in the drawings indicate the forward direction of the vehicle, the right-hand direction of the vehicle, and the upward direction of the vehicle, respectively.

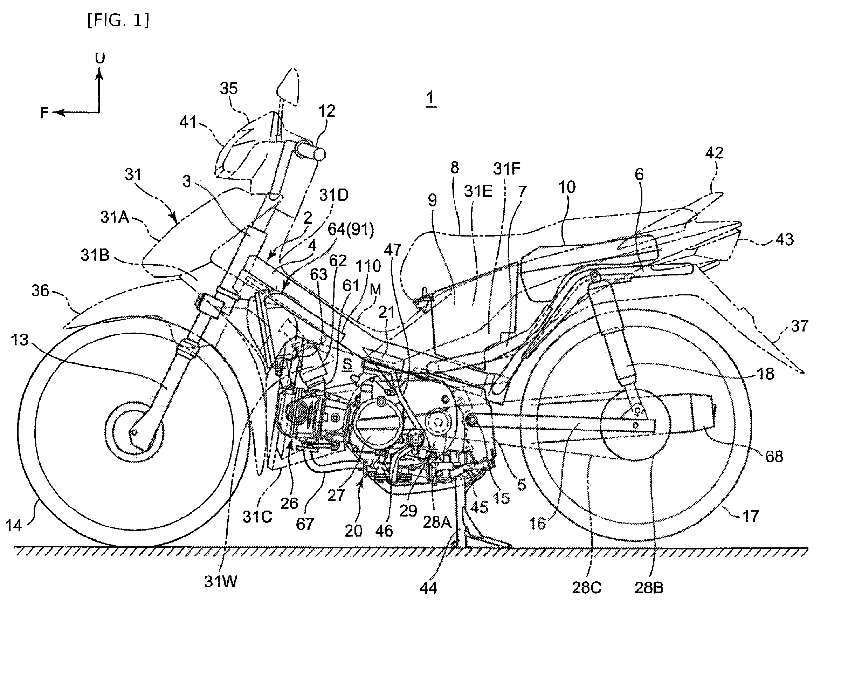

Fig. 1 is a left-side view of a motorcycle according to an embodiment of a saddle-ride type vehicle of the present invention. The motorcycle 1 includes a vehicle-body frame 2. The vehicle-body frame 2 includes a head pipe 3, a single main frame 4, a pair of left and right pivot plates 5, a pair of left and right rear frames 6, and a pair of left and right sub frames 7. The head pipe 3 is provided a front end of the vehicle-body frame 2. The main frame 4 extends obliquely rearward and downward from the head pipe 3. The pair of left and right pivot plates 5 are joined to rear end portions of the main frame 4 and extend downward. The pair of left and right rear frames 6 are joined to rear end portions of the main frame 4, extend obliquely rearward and upward, and then extend rearward. The pair of left and right sub frames 7 are joined to middle portions of the main frame 4, extend obliquely rearward and upward, and are then joined, at the rear end portions, to the rear frames 6.

A rider's seat 8 is provided above the pair of left and right rear frames 6 of the vehicle-body frame 2. A storage box 9 is provided below a front portion of the seat 8. A fuel tank 10 is provided below a rear portion of the seat 8. In addition, a handle-bar 12 pivotally supported by the head pipe 3 is provided above a front portion of the vehicle body. A front fork 13 extends downward below the head pipe 3, and a front wheel 14 is pivotally supported at a lower end portion of the front fork 13. A rear fork 16 is swingably supported at a front end thereof by a pivot shaft 15 on the pivot plates 5 at a center of the vehicle body and extends rearward. A rear wheel 17 is pivotally supported at a rear end portion of the rear fork 16. A pair of left and right rear cushions 18 are set between rear portions of the rear fork 16 and the rear frames 6.

An engine (referred to also as a power unit) 20, which is an internal combustion engine, is hung below the main frame 4 and forward of the pivot plates 5. An upper portion of the engine 20 is hung by an engine hanger 21 vertically provided at a center portion of the main frame 4. A rear portion of the engine 20 is fixed to the pivot plates 5. In other words, the engine 20 is supported in such a state as to be hung at a position below a rear portion of the main frame 4. Moreover, the motorcycle 1 is provided with a vehicle-body cover 31 including a plurality of cover members and covering an upper side and lateral sides of the main frame 4.

The vehicle-body cover 31 is formed of cover members made of synthetic resin. The vehicle-body cover 31 includes a front cover 31A, left and right front side covers 31B, and an underside cover 31C. The front cover 31A is located forward of the head pipe 3 and covers a front portion of the vehicle body from the front. The left and right front side covers 31B extend obliquely rearward and downward from the left and right sides of the front cover 31A in such a manner as to cover lateral sides of a front upper portion of the vehicle body. The underside cover 31C is joined to the left and right front side covers 31B and covers lateral sides of a front lower portion of the vehicle body. The front side covers 31B and the underside cover 31C bulge to the left and right sides to function as left and right leg shields for covering the fronts of the legs of the rider (driver), and also function as side covers covering the lateral sides of the front portion of the vehicle body.
It should be noted that the front cover 31A and the front side covers 31B are integrally formed in this structure but may be separately formed, and also, that the front side covers 31B and the underside cover 31C may be formed integrally as a single side cover.

In addition, the vehicle-body cover 31 includes a center tunnel cover 31D, left and right rear side upper covers 31E, and left and right rear side lower covers 31F. The center tunnel cover 31D continues to rear portions of the front side covers 31B, and extends obliquely rearward and downward in the form of a mountain-like cross-sectional shape convex upward. The left and right rear side upper covers 31E cover upper portions of lateral sides of a rear portion of the vehicle body. The left and right rear side lower covers 31F are joined to lower edges of the respective rear side upper covers 31E. The rear side upper covers 31E and the rear side lower covers 31F function as a rear side cover covering the lateral sides of the rear portion of the vehicle body.
In addition, the motorcycle 1 includes a handle-bar cover 35, a front fender 36, a rear fender 37, and the like as cover members other than the vehicle-body cover 31. It should be noted that, in Fig. 1, reference numeral 41 denotes a head light, reference numeral 42 a grab rail, reference numeral 43 a tail light, reference numeral 44 a center stand, reference numeral 45 a side stand, reference numeral 46 a pair of left and right steps on which the rider (driver) places his/her legs, reference numeral 47 a kick arm which is stepped down by the driver to start the engine 20.

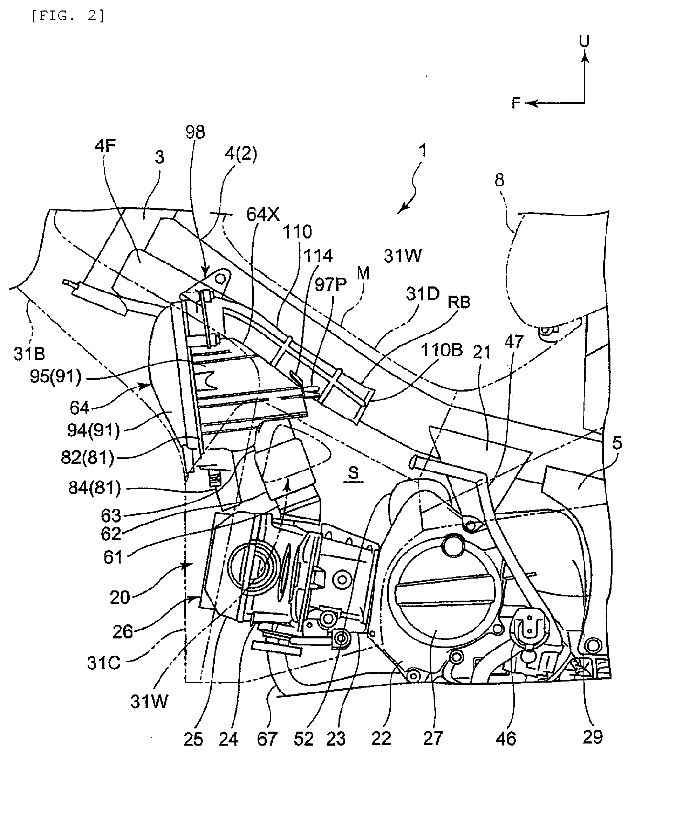

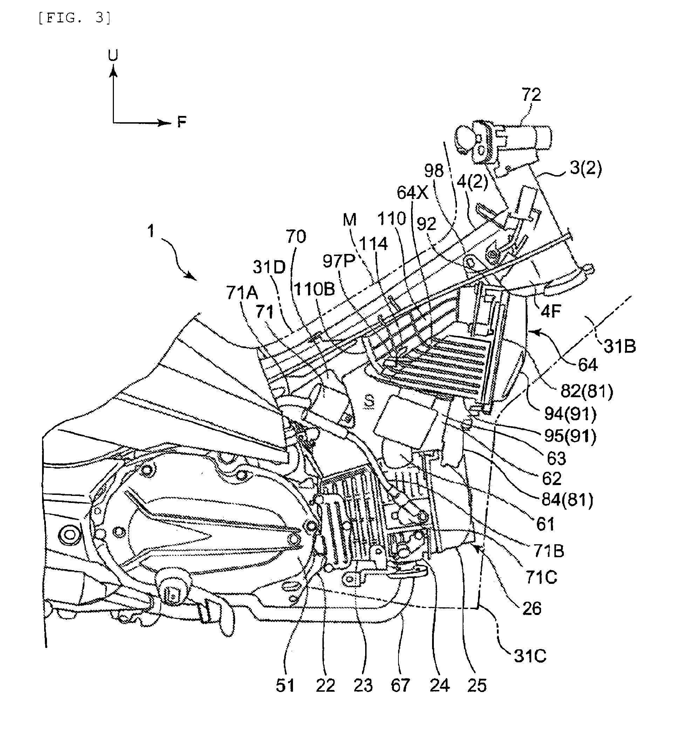

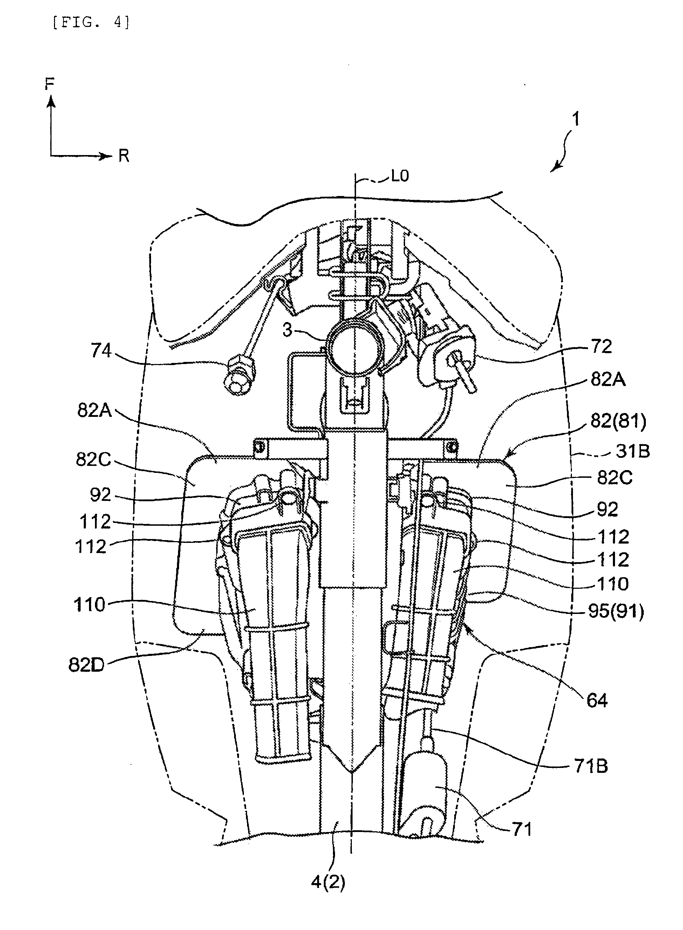

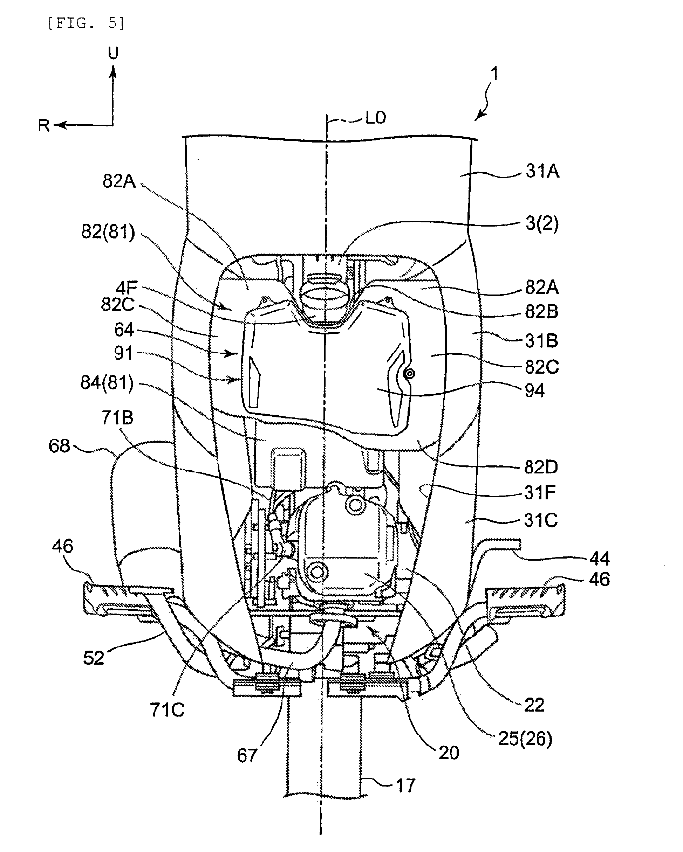

Fig. 2 is a left-side view showing the engine 20 together with the peripheral structure. Fig. 3 is a right-side view showing the same. Fig. 4 is a top view showing the same. Fig. 5 is a front view showing the same. It should be noted that, in the illustration of Fig. 5, components of the steering system, such as the front wheel 14 and the front fork 13, are omitted.

The engine 20 is an air-cooled single-cylinder engine, and includes a crankcase 22, a cylinder block 23 attached to a front end portion of the crankcase 22, a cylinder head 24 attached to a front end portion of the cylinder block 23, and a cylinder head cover 25 covering an opening at a front portion of the cylinder head 24. In other words, the engine 20 is configured as a horizontal engine in which a cylinder portion 26 constituted of the cylinder block 23, the cylinder head 24, and the cylinder head cover 25 is disposed substantially horizontally in such a manner as to protrude frontward from the crankcase 22. For this reason, it is possible to lower in height the center of gravity of the vehicle body, and also to dispose the main frame 4 at a low position as illustrated, so that a straddling portion M which the driver straddles when riding the vehicle can be lowered, in turn facilitating the getting on and off of the vehicle.

Moreover, as shown in Fig. 2, an electric-generator cover 27 and a sprocket cover 29 are attached to a left-side wall of the crankcase 22. The electric-generator cover 27 covers an electric generator (not shown) housed on the left side of a front portion of the crankcase 22. The sprocket cover 29 covers a drive sprocket 28A (see Fig. 1) provided on the left side of a rear portion of the crankcase 22. It should be noted that a power transmission chain 28C (see Fig. 1) is looped between the drive sprocket 28A and a drive sprocket 28B (see Fig. 1) provided integrally to the rear wheel 17, and these components constitute a chain transmission mechanism for transmitting power of the engine 20 to the rear wheel 17. Additionally, in Fig. 2, reference numeral 52 denotes a starter motor disposed on an upper portion of the crankcase 22. Moreover, a transmission cover 51 for housing a transmission (not shown) in cooperation with the crankcase 22 is provided on a right-side wall of the crankcase 22 as shown in Fig. 3.

As shown in Fig. 2 and Fig. 3, an intake pipe 61 is connected to an upper wall of the cylinder head 24 of the engine 20. The intake pipe 61 extends upward to be connected to a lower end (corresponding to a downstream end) of a throttle body 62. An air cleaner 64 is connected to an upper end (corresponding to an upstream end) of the throttle body 62 via a connecting tube 63. Specifically, the intake pipe 61, the throttle body 62, the connecting tube 63, and the air cleaner 64 constitute an intake system of the engine 20.

In addition, an exhaust pipe 67 is connected to a lower wall of the cylinder head 24. The exhaust pipe 67 extends downward, and thereafter, is bent to the rear and extends rearward, and is connected to a muffler 68 (see Fig. 1) disposed on the right side of the rear wheel 17. Specifically, the exhaust pipe 67 and the muffler 68 constitute an exhaust system of the engine 20.

In the structure, an upper edge portion of the center tunnel cover 31D is provided to extend obliquely near and along the main frame 4 disposed inside the center tunnel cover 31D. The intake system of the engine 20 is disposed in a space which is inside the front side cover 31B, the underside cover 31C, and the center tunnel cover 31D, and which is below the main frame 4.
To be described in detail, in the vehicle 1, the air cleaner 64 is provided below the front portion of the main frame 4, and is arranged at a position overlapping, in a side view, the left and right lower edges of the center tunnel cover 31D as well as the front side covers 31B and the underside cover 31C. In addition, the intake system components (the connecting tube 63, the throttle body 62, and the intake pipe 61) connected with one another from the air cleaner 64 to the cylinder portion 26 are disposed below the main frame 4 and rearward of the air cleaner 64, and arranged at positions overlapping, in the side view, the underside cover 31C in such a manner as to be vertically connected with one another along the center of the vehicle body (the center in the vehicle-width direction).

In other words, the intake system of the engine 20 is arranged in the following manner by utilizing an interior space which is below the main frame 4 and surrounded by the center tunnel cover 31D, the front side covers 31B, and the underside cover 31C. Specifically, the intake system of the engine 20 is arranged in such a manner that the intake system components are distributed in the vertical direction so as not to overlap one another in the vehicle-width direction. This arrangement makes it possible: to dispose the intake system components by efficiently utilizing the inner space of these covers; to suppress the bulging of the engine intake system to the outside in the vehicle-width direction; and also to achieve an external design in which the most part of the engine intake system is not exposed as the external appearance in the side view.

Moreover, an ignition coil 71 constituting part of an ignition system of the engine 20 is disposed, inside an upper portion of the underside cover 31C, and rearward of the intake system components (the connecting tube 63, the throttle body 62, and the intake pipe 61) (see Fig. 3 and Fig. 4).

More specifically, as shown in Fig. 3, the ignition coil 71 is provided on a stay 70 which is provided to the main frame 4, on the right side of the main frame 4 and at a position overlapping, in the side view, the lower portion of the main frame 4. An electric-power supply line 71A extending from an unillustrated battery is connected to a rear end of the ignition coil 71, and a plug cord 71B extending from a front end of the coil 71 is connected via a plug cap 71C to an ignition plug (not shown) attached to the right side of the cylinder portion 26 of the engine 20.

In addition, in Fig. 4, reference numeral 72 denotes a handle-bar lock disposed on the right side of the head pipe 3, and reference numeral 74 denotes a lever for releasing the locking state of a brake locked by a brake lock. Both of the handle-bar lock 72 and the lever 74 are configured to be operated by the rider (driver), and may be distributed on the left and right sides of the head pipe 3, thereby being provided at positions easy to operate.

Moreover, as shown in Fig. 5, an opening portion (hereinafter, referred to as a traveling-wind introduction opening portion) 31F is formed in the vehicle-body cover 31 at a position corresponding to the front of the cylinder portion 26. With this structure, a traveling wind from the front of the vehicle body is caused to flow toward the cylinder portion 26 and the like through the traveling-wind introduction opening portion 31F. To be described in detail, the traveling-wind introduction opening portion 31F is defined by the lower edge of the front cover 31A and the inner edges of the front portions of the left and right front side covers 31B, and is formed in an opening shape vertically elongated to open downward.
As shown in Fig. 5, the traveling-wind introduction opening portion 31F is formed as an opening which is vertically elongated to have an upper end opening up to a position corresponding to the head pipe 3, and also as a large-width opening having a left-to-right width which is somewhat larger than that of the cylinder portion 26 and slightly smaller than that of the crankcase 22. Thereby, the traveling-wind introduction opening portion 31F is formed as an opening portion capable of supplying a sufficient amount of traveling wind to the cylinder portion 26.

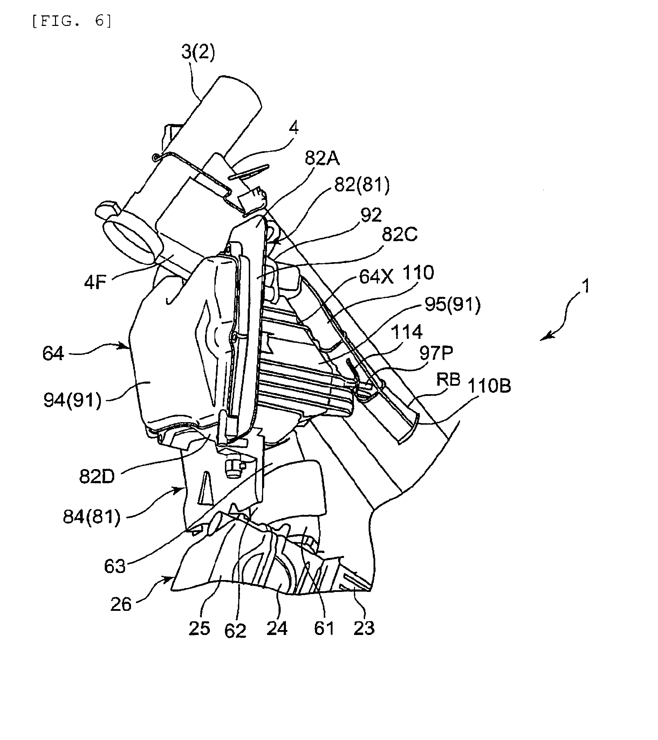

Fig. 6 is a perspective view showing the air cleaner 64 together with the peripheral structure as viewed from below the left side of the vehicle body. As shown in Fig. 5 and Fig. 6, the air cleaner 64 of this structure is provided with a blocking wall 81 extending around the air cleaner 64 in a front view of the vehicle body. The blocking wall 81 blocks part of the traveling-wind introduction opening portion 31F, thereby making it possible for dust such as mud and coarse particulates kicked up by the front wheel 14 to enter to the intake system components.

To be described in detail, the blocking wall 81 includes a plate-shaped first blocking wall 82 and a plate-shaped second blocking wall 84. The first blocking wall 82 extends upward, downward, leftward, and rightward, from the entire outer periphery of a case portion (hereinafter, referred to as an air cleaner case 91) of the air cleaner 64. The second blocking wall 84 extends from the lower surface of the air cleaner case 91 to a position lower than the first blocking wall 82. The first blocking wall 82 prevents dust flying from the front of the vehicle body from entering between the air cleaner 64 and each of the front side covers 31B. The second blocking wall 84 prevents dust from entering between the air cleaner 64 and the cylinder portion 26.

The first blocking wall 82 includes an upper blocking wall 82A extending upward from an upper wall of the air cleaner case 91 with a width larger than that of the air cleaner case 91. The upper blocking wall 82A is provided in front of a pair of left and right intake duct connecting portions 92 provided on an upper portion of the air cleaner case 91 (see Fig. 6), and extends upward and outward, on both of the left and right sides, of the intake duct connecting portions 92. The upper blocking wall 82A prevents dust from entering the surroundings of the intake duct connecting portions 92.
In addition, a concave portion 82B depressed downward is formed in a lateral center portion of the upper blocking wall 82A. The concave portion 82B is in contact with an outer peripheral surface of a gusset portion 4F laid between the lower portion of the head pipe 3 and the front end portion of the main frame 4, and thus closes a gap between the gusset portion 4F and the air cleaner case 91. With this structure, dust is prevented from entering through the gap.

Further, the first blocking wall 82 includes left and right side blocking walls 82C and a lower blocking wall 82D. The side blocking walls 82C extend from the left and right walls of the air cleaner case 91 to the left and right of the air cleaner case 91. The lower blocking wall 82D extends downward from the lower wall of the air cleaner case 91 with a width larger than that of the air cleaner case 91. These blocking walls 82C and 82D prevent dust from entering from the left, right, and lower sides of the air cleaner case 91.
In this case, the left and right side blocking walls 82C, as shown in Fig. 5, close the gaps on the left and right sides of the air cleaner case 91 in the traveling-wind introduction opening portion 31F in the front view of the vehicle body. Thus, the left and right side blocking walls 82C prevent dust from entering the left and right sides of the case 91. This structure makes it difficult for dust to enter through the upper, lower, left, and right sides of the air cleaner case 91.

On the other hand, the second blocking wall 84, as shown in Fig. 6, extends downward to the vicinity of the cylinder portion 26 in such a manner as to be located forward of the intake system components (the connecting tube 63, the throttle body 62, and the intake pipe 61) connected with one another from the air cleaner 64 (the air cleaner case 91) to the cylinder portion 26. This structure makes it difficult for dust such as mud and coarse particulates kicked by the front wheel 14 to enter between the air cleaner 64 and the cylinder portion 26.
Furthermore, in this structure, the components, such as the ignition coil 71, constituting part of the ignition system of the engine 20 are disposed rearward of the intake system components, as described above. Accordingly, it is also possible to prevent dust from entering the surroundings of the components of the engine ignition system with the above-described blocking wall 81 (the first blocking wall 82 and the second blocking wall 84).

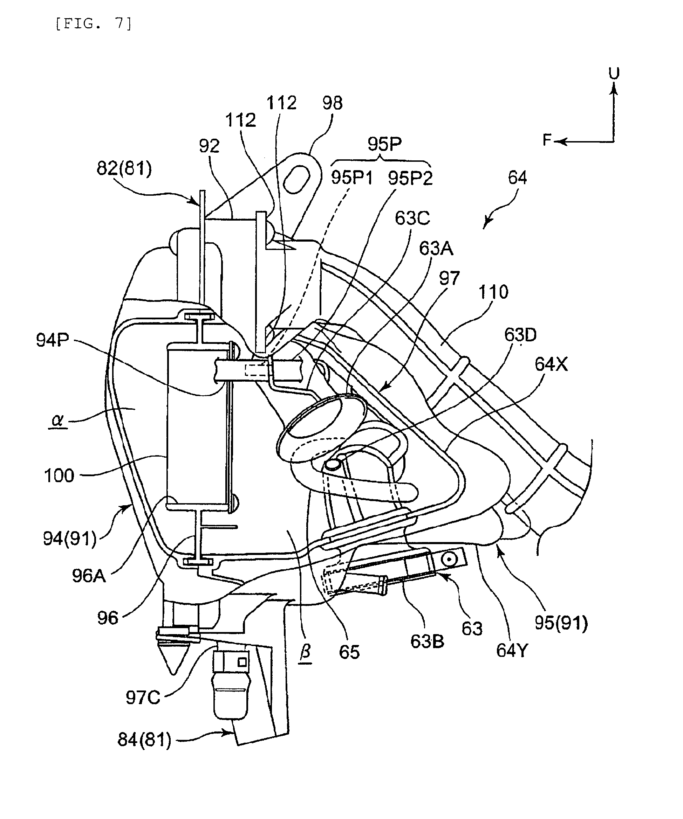

Fig. 7 is a view showing part of an internal structure of the air cleaner 64 as viewed from the left side.

The air cleaner 64 is formed to be capable of separating into an air-cleaner-case cover (hereinafter, referred to as a case cover) 94 which is made of synthetic resin and constitutes a front component and an air-cleaner-case main body (hereinafter, referred to as a case main body) 95 which is made of synthetic resin and constitutes a rear component. The air cleaner case 91 is formed by covering an opening in the front surface of the case main body 95 with the case cover 94.

The inside of the air cleaner case 91 is provided with a partition plate 96 having an opening portion 96A at the boundary between the case cover 94 and the case main body 95. The air cleaner case 91 is thus partitioned by the partition plate 96 into an outside-air introducing chamber α on the case cover 94 side and a cleaned-air chamber β on the case main body 95 side. An air cleaner element 100 for cleaning air flowing from the outside-air introducing chamber α to the cleaned-air chamber β is fitted on the opening portion 96A of the partition plate 96.
The air cleaner case 91 is formed in the shape of a hollow box having a substantially triangular shape in the side view, and an upper surface 64X of the air cleaner case 91 is inclined to extend obliquely rearward and downward. Most part of the air cleaner case 91 is constituted of the case main body 95, in other words, the case main body 95 is formed in the shape of a hollow box having a substantially triangular shape in the side view.

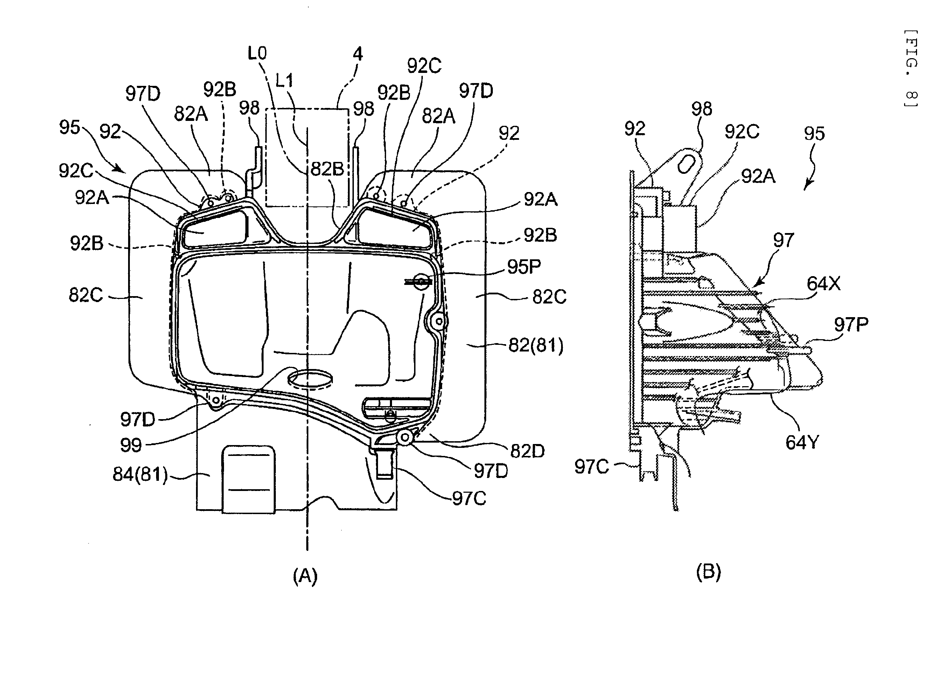

Parts (A) and (B) of Fig. 8 are a front view and a left-side view of the case main body 95, respectively.
The case main body 95 is formed in the shape of a hollow box with an opening in the front surface, the hollow box having a substantially rectangular shape in the front view and having a substantially triangular shape in the side view in which the upper surface 64X is inclined to extend obliquely rearward and downward, and a rear end of the upper surface 64X is connected to a rear end of a lower surface 64Y extending to the front and rear in a substantially horizontal direction.
The case main body 95 includes a bulged portion 97, the pair of left and right intake duct connecting portions 92, the blocking wall 81 (the first blocking wall 82 and the second blocking wall 84), and a pair of left and right stays 98, all of which are formed integrally by synthetic resin molding. The bulged portion 97 forms the cleaned-air chamber β. The pair of left and right intake duct connecting portions 92 extend upward from an upper edge of a front end portion of the bulged portion 97 to form a pair of left and right intake openings 92A. The blocking wall 81 is formed integrally on the front end portion of the bulged portion 97. The pair of left and right stays 98 extend upward from the pair of left and right intake duct connecting portions 92.

As shown in Part (A) of Fig. 8, a through-hole 99 is formed in a lower surface portion (corresponding to the lower surface 64Y) of the bulged portion 97. The through-hole 99 penetrates the lower surface portion in the up-down direction at the lateral center position. The connecting tube 63, which connects the case main body 95 (the air cleaner 64) and the throttle body 62, passes through the through-hole 99.
The lower surface portion of the bulged portion 97 is also formed to be inclined downward as the lower surface portion extends to the left side of the case main body 95. A drain hole 97C is formed at the deepest portion of the inclined surface. In addition, fixing portions 97D for bolting the case cover 94 are formed at intervals in the front portion of the bulged portion 97. In this case, the case cover 94 covers the openings in the front surface of the bulged portion 97 and the pair of left and right intake duct connecting portions 92, so that the pair of left and right intake openings 92A (outside-air inlets) provided respectively to the intake duct connecting portions 92 are caused to communicate with the inside of the case cover 94, that is, the outside-air introducing chamber α.

The pair of left and right stays 98 are attachment members for attaching the case main body 95 to the main frame 4. As shown in Fig. 8, Fig. 2, and Fig. 3, the case main body 95 is moved from the lower side to the upper side of the main frame 4 to insert the main frame 4 between the left and right stays 98. Then, each of the stays 98 is bolted to the main frame 4, so that the case main body 95 is fixed to the main frame 4. At this time, the case main body 95 is fixed to the main frame 4 in such a manner that a lateral center line L1 of the case main body 95 coincides with a vehicle-body center line L0 (a center line in the vehicle-width direction). To put it differently, the case main body 95 is arranged in such a manner that the lateral center of the case main body 95 is aligned with the lateral center of the main frame 4. Moreover, the concave portion 82B in which the main frame 4 and the gusset portion 4F are placed is provided in the lateral center portion of the upper surface portion of the case main body 95. When the case main body 95 is fixed to the main frame 4, the left and right intake duct connecting portions 92 located on the left and right of the concave portion 82B of the case main body 95 are positioned on the left and right sides of the main frame 4, and overlap the main frame 4 in the side view, as shown in Fig. 2 and Fig. 3.

The pair of left and right intake duct connecting portions 92 are substantially bilaterally symmetrical with respect to the vehicle-body center line L0 as shown in Part (A) of Fig. 8. Upper surfaces 92C of the pair of left and right intake duct connecting portions 92 are formed as inclined surfaces obliquely inclined downward as the upper surfaces 92C extend outward from the vehicle-body center line L0 in the vehicle-width direction.
Moreover, the pair of left and right intake openings 92A formed respectively in the left and right intake duct connecting portions 92 are each formed in a laterally-elongated substantially trapezoidal shape in the front view. The intake openings 92A are also substantially bilaterally symmetrical with respect to the vehicle-body center line L0. Upper opening edges of the intake openings 92A extend along the upper surfaces of the intake duct connecting portions 92, and thus are formed in shapes obliquely inclined downward as the upper opening edges extend outward from the vehicle-body center line L0 in the vehicle-width direction.

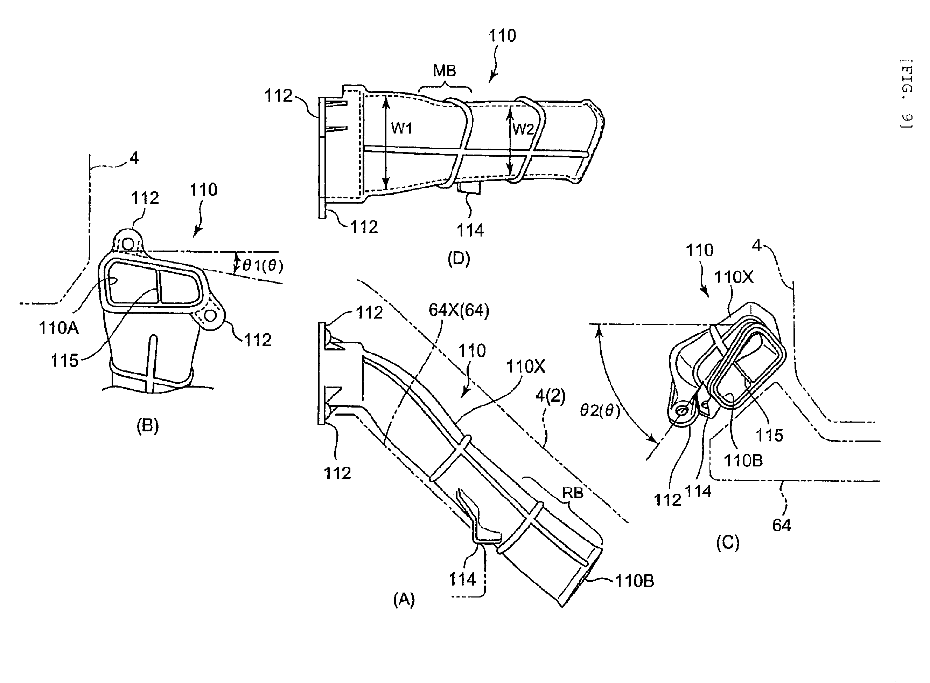

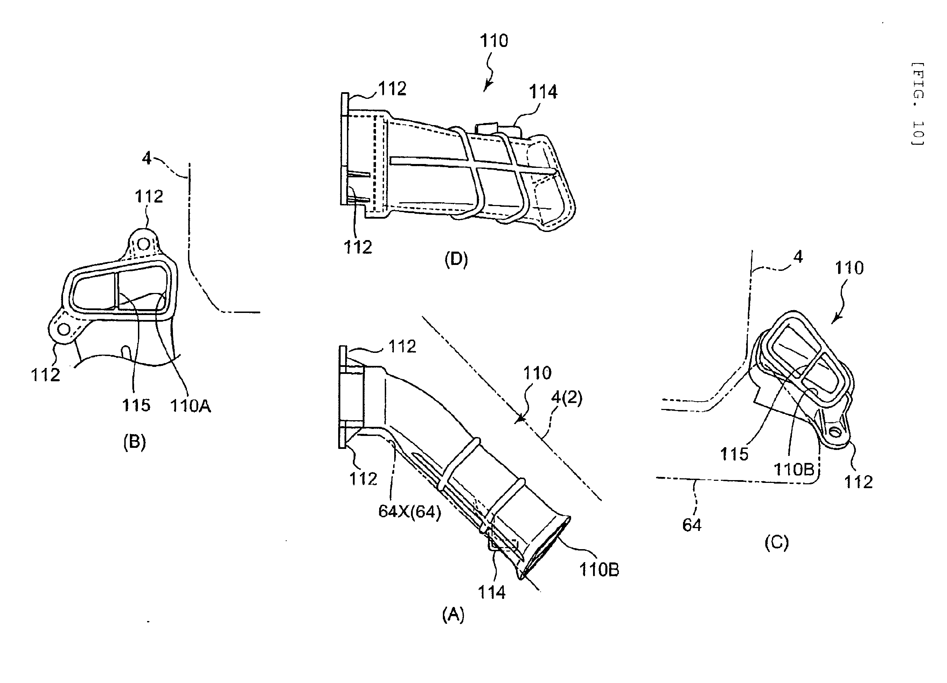

A pair of left and right intake ducts 110 are connected respectively to the left and right intake duct connecting portions 92. The pair of left and right intake ducts 110 are formed of synthetic resin, and each have a tubular shape having a substantially trapezoidal cross section. Each of the left and right intake ducts 110 is disposed in such a manner as to be inclined obliquely rearward and downward as each intake duct 110 extends from a front end opening 110A (see Fig. 9 and Fig. 10) thereof along the upper surface 64X of the air cleaner 64 (see Fig. 2 and Fig. 3). In the structure, the intake ducts 110 having different lengths (duct lengths) are used on the left and right sides (see Fig. 4).

The intake ducts 110 are inclined to extend along the upper surface 64X of the case main body 95 of the air cleaner 64. For this reason, when connected to the air cleaner 64, the intake ducts 110 are placed along the air cleaner 64, so that the entire shape is compact.
Furthermore, the upper surface 64X of the case main body 95 of the air cleaner 64 is inclined to extend along the inclination of the main frame 4 in the side view. For this reason, the left and right intake ducts 110 are disposed along the inclination of the main frame 4 on the left and right sides of the main frame 4 (see Fig. 2 and Fig. 3). In this manner, the left and right intake ducts 110 can be disposed by utilizing a dead space between the main frame 4 and the center tunnel cover 31D covering the main frame 4 from above.
Specifically, as shown in Fig. 2, Fig. 3, and Fig. 11, the intake ducts 110 of the structure extend linearly toward the rear of the vehicle through the space surrounded by: the center tunnel cover 31D, which constitutes part of the vehicle-body cover 31; the main frame 4; and the air cleaner 64. As a result, the intake ducts 110 are formed as intake ducts which have long duct lengths enabling an effective reduction of intake noise and which have small intake resistances.

As shown in Fig. 2 and Fig. 3, the engine 20 of the motorcycle 1 includes the cylinder portion 26 disposed substantially horizontally in such a manner as to protrude forward from the crankcase 22, so that a large gap is formed between the cylinder portion 26 and the main frame 4.
In addition, only the intake system components (the intake pipe 61, the throttle body 62, and the connecting tube 63), which are small components, as well as the ignition coil 71 are disposed in the space substantially surrounded by the cylinder portion 26, the main frame 4, and the air cleaner 64. Accordingly, the space contains a small number of components of the vehicle.
In the structure, as shown in Fig. 2 and Fig. 3, the intake ducts 110 having one ends connected to the air cleaner 64 are located in a space S formed between the main frame 4 and the cylinder portion 26 in the side view, and rear end openings 110B of the intake ducts 110 are opened at positions spaced apart from the front surface of the crankcase 22 of the engine 20 toward the front of the vehicle. In other words, the openings of the intake ducts 110 are opened in the space S containing a small number of components of the vehicle, and are thus facilitated to take in the outside air.

Next, the intake ducts 110 will be described in detail.
Fig. 9 is a view showing the intake duct 110 on the left side. More specifically, Part (A) of Fig. 9 is a side view, Part (B) of Fig. 9 is a view seen from the front end opening side, Part (C) of Fig. 9 is a view seen from the rear end opening side, and Part (D) of Fig. 9 is a top view. On the other hand, Fig. 10 is a view showing the intake duct 110 on the right side. Part (A) of Fig. 10 is a side view, Part (B) of Fig. 10 is a view seen from the front end opening side, Part (C) of Fig. 10 is a view seen from the rear end opening side, and Part (D) of Fig. 10 is a top view. It should be noted that Parts (B) and (D) of Fig. 9 as well as Parts (B) and (D) of Fig. 10 schematically show the position of the main frame 4 near the respective openings.
Here, since the pair of left and right intake ducts 110 are bilaterally symmetric except that one of the intake ducts 110 (one on the left side in the embodiment) is formed to have a longer duct length than that of the other, only the left intake duct 110 will be described in detail below.

A pair of stays 112 are provided on the front end portion of the intake duct 110 (see Part (B) of Fig. 9). One of the stays 112 extends upward from the inner side of the intake duct 110 in the width direction (the side closer to the main frame 4) while the other extends downward from the outer side of the intake duct 110 in the width direction (the side opposite to the main frame 4). In this manner, the stays 112 are arranged to be spaced apart vertically and laterally from each other. As shown in Part (A) of Fig. 8, a pair of bolt fastening portions 92B are provided on the left side of the back surface of the air cleaner 64 in such a manner that the bolt fastening portions 92B are spaced apart vertically and laterally from each other as well. The stays 112 are bolted to the respective bolt fastening portions 92B, so that the intake duct 110 is joined to the air cleaner 64.

The front end opening 110A of the intake duct 110 is formed in the same shape as that of the intake opening 92A formed in the intake duct connecting portion 92 of the air cleaner 64. Accordingly, when the intake duct 110 is joined, the front end opening 110A and the intake opening 92A communicate with each other.
It should be noted that, in Part (A) of Fig. 9, reference numeral 114 denotes a plate-shaped positioning member for positioning the intake duct 110 to the air cleaner 64. A projecting portion 97P (see Fig. 2) which projects rearward from the rear portion of the bulged portion 97 of the air cleaner 64 is inserted to the positioning member 114, so that the rear portion of the intake duct 110 is positioned to the air cleaner 64. Additionally, in Parts (B) and (D) of Fig. 9, reference numeral 115 denotes a reinforcement rib extending, inside the opening of the intake duct 110, from the front end opening 110A to the rear end opening 110B.

The intake duct 110 has a shape substantially linearly extending obliquely rearward and downward from the front end portion thereof, and has an opening width different between the front half and the rear half of the intake duct 110. Specifically, the intake duct 110 is formed in such a manner that the width W1 of the front half (see Part (D) of Fig. 9) is larger than the width W2 of the rear half (see Part (D) of Fig. 9) (W1 > W2). The width of a portion (which is referred to as a linkage portion MB (see Part (D) of Fig. 9)) located between the front half and the rear half is gradually decreased from the width W1 of the front half to the width W2 of the rear half, thereby achieving the linkage with the width smoothly and continuously decreased. As a result, it is possible to reduce intake noise while reducing the intake resistance of the intake duct 110. It should be noted that, although the duct shape has been described with the drawings showing the left intake duct 110, the right intake duct 110 is also formed to have the same duct shape, which makes it possible to reduce intake noise while reducing the intake resistance of the intake duct 110.
In addition, the intake duct 110 has a shape gradually twisted inward in such a manner that the inclination angle θ of an upper surface 110X of the intake duct 110 in the vehicle-width direction (a downward inclination angle with respect to the horizontal plane) is increased as the intake duct 110 extends toward the rear of the vehicle body. The left intake duct 110 thus has a large inward twist in the vehicle-width direction at a portion thereof (which is referred to as a projecting portion RB (see Part (A) of Fig. 9)) projecting rearward beyond the rear end of the air cleaner 64 in the side view. In other words, the intake duct 110 is formed in such a manner that the inclination angle θ1 of the front end opening 110A is smaller than the inclination angle θ2 of the rear end opening 110B.

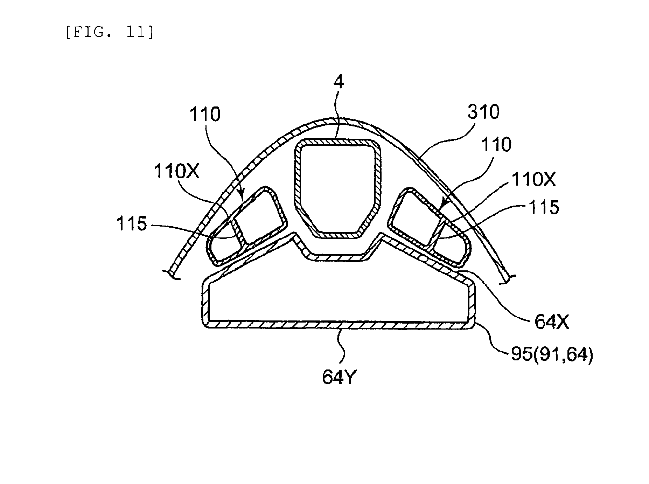

Here, Fig. 11 is a cross-sectional view schematically showing the intake ducts 110 together with the peripheral structure with the air cleaner 64 attached to the motorcycle 1. As shown in Fig. 11, the main frame 4 is located between the left and right intake ducts 110, and the center tunnel cover 31D is disposed to cover the main frame 4 as well as the left and right intake ducts 110 over a range from the upper side to the lateral sides.
In the structure, the upper surface 110X of each of the intake ducts 110 is located below the upper surface of the main frame 4, and is inclined downward as the upper surface 110X extends away from the main frame 4 in the vehicle-width direction. Accordingly, a smaller width is required for the layout of the left and right intake ducts 110 at an upper position. For this reason, as shown in Fig. 11, disposing the center tunnel cover 31D closer to the upper surfaces 110X of the intake ducts 110 allows the upward bulging of the center tunnel cover 31D to be suppressed on the left and right outer side of the main frame 4, so that an increase in size of the center tunnel cover 31D can be suppressed.
Moreover, the upper surface 110X of the left intake duct 110 has an inclination angle which is increased as the projecting portion RB projecting rearward beyond the rear end of the air cleaner 64 extends rearward. Accordingly, the width required for the layout of the left intake duct 110 is decreased as the intake duct 110 extends rearward (see, for example, Fig. 4). For this reason, at a more rearward position on the intake duct 110, the bulging of the center tunnel cover 31D in the vehicle-width direction can be further decreased, in turn, the width of the straddling portion M which the driver straddles when getting on and off the vehicle can be further decreased.

Furthermore, in the structure, as shown in Fig. 11, the upper surface 64X of the air cleaner 64 is also formed as an inclined surface inclined downward as the upper surface 64X extends away from the main frame 4 in the vehicle-width direction. For this reason, a large space surrounded by the upper surface 64X of the air cleaner 64, the center tunnel cover 31D, and the main frame 4 can be secured, so that a large space can be secured for the layout of the intake ducts 110 disposed along the upper surface 64X of the air cleaner 64.
Accordingly, the intake ducts 110 whose opening is increased in diameter (increased in size) to reduce the intake resistance can be disposed.

Next, the connecting tube 63 disposed inside the air cleaner 64 will be described.

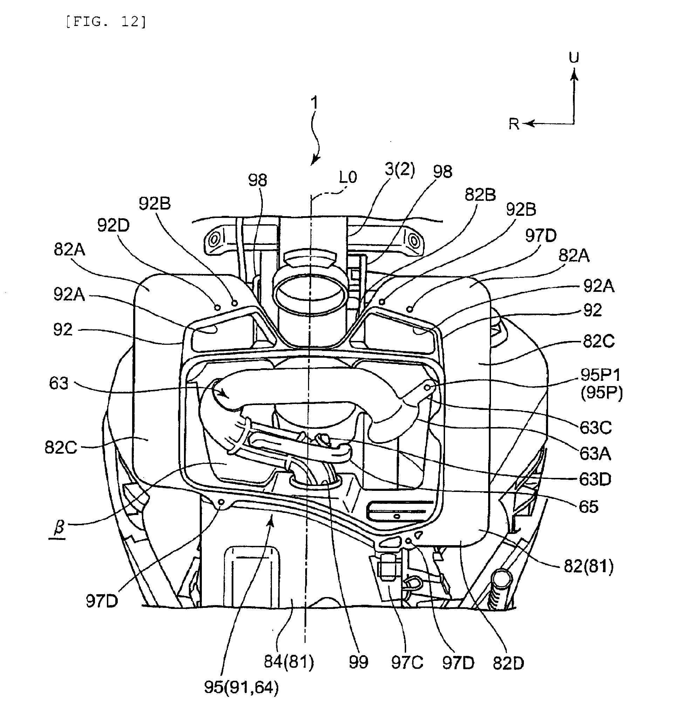

Fig. 12 shows the air cleaner 64 together with the peripheral structure with the case cover 94 detached from the air cleaner 64. It should be noted that the partition plate 96 in the air cleaner 64 is also removed off in Fig. 12. As shown in Fig. 7 and Fig. 12, the connecting tube 63 is disposed to meander in such a manner as to draw a ring inside the case main body 95 of the air cleaner 64, that is, inside the cleaned-air chamber β. More specifically, the connecting tube 63 has an upstream opening 63A which is disposed to face obliquely downward at a position on one side (the left side in the embodiment) in the cleaned-air chamber β. The connecting tube 63 is annularly bent substantially along an inner peripheral wall of the cleaned-air chamber β while extending from the upstream opening 63A. Then, the connecting tube 63 passes through the through-hole 99 formed in the bottom surface of the cleaned-air chamber β, and has a downstream opening 63B (see Fig. 7) exposed to the outside of the air cleaner 64.

Specifically, the upstream opening 63A of the connecting tube 63 is located near the intake duct connecting portion 92 to which the intake duct 110 having a longer duct length is connected among the pair of left and right intake duct connecting portions 92. In other words, the upstream opening 63A is located on the opposite side of the vehicle-body center line L0 to the intake duct connecting portion 92 to which the intake duct 110 having a shorter duct length is connected.
In this case, the opening, in the air cleaner 64, of the connecting tube 63 leading to the throttle body 62 is provided on the left side of the vehicle-body center line L0 where the intake duct 110 having the longer duct length is disposed. For this reason, even when intake noise coming out from the opening of the connecting tube 63 is transmitted, while being not attenuated much in the air cleaner 64, to the intake duct 110 with the longer duct length on the left side which is close to the opening of the connecting tube 63, the intake noise can be reduced because of the long duct length. As a result, the amount of intake noise to leak out from the air cleaner 64 can be reduced. In addition, the arrangement of causing the upstream opening 63A of the connecting tube 63 to face downward also makes it possible to effectively reduce the intake noise to be transmitted to the rider.

In addition, a single stay 63C is provided integrally on the connecting tube 63 at a position near the upstream opening 63A. As shown in Fig. 7 and Fig. 12, a stepped pin portion 95P extends frontward from the case main body 95 of the air cleaner 64, and a small diameter portion 95P1 of the stepped pin portion 95P is inserted through the stay 63C. With the insertion, the upstream opening 63A of the connecting tube 63 is positioned to the case main body 95.
Moreover, as shown in Fig. 7, an insertion portion 94P is provided in the case cover 94 joined to the front face of the case main body 95. The small diameter portion 95P1 of the pin portion 95P protruding frontward through a hole (not shown) provided in the stay 63C is further inserted into the insertion portion 94P. When the case cover 94 is fixed to the case main body 95, the stay 63C is held between the insertion portion 94P and a large diameter portion 95P2 of the pin portion 95P. With this, the upstream opening 63A of the connecting tube 63 can be fixed to the air cleaner 64.

Furthermore, a resonator 65 for intake noise reduction is attached to the connecting tube 63. The resonator 65 is a resonator for reducing intake noise by utilizing the Helmholtz resonance principle, and is fixed to a locking portion 63D provided to the connecting tube 63 in such a manner as to be placed inside a space surrounded by the connecting tube 63, which meanders to draw a ring inside the cleaned-air chamber β. This arrangement makes it possible to dispose the resonator 65 having a sufficient amount of capacity by utilizing the limited space in the air cleaner 64.
In this manner as described above, in the motorcycle 1, air taken in through the pair of left and right intake ducts 110 is introduced into the outside-air introducing chamber α. Then, the air is cleaned by the air cleaner element 100 and introduced into the cleaned-air chamber β. Thereafter, the air passes through the connecting tube 63 and is supplied to the engine 20 through the other intake system components, such as the throttle body 62.

As described so far, according to the embodiment, the intake ducts 110 attached to the intake openings 92A (outside-air inlets) of the air cleaner 64 extend linearly toward the rear of the vehicle along the main frame 4 through the space surrounded by the center tunnel cover 31D (the vehicle-body cover 31), the main frame 4, and the air cleaner 64. Accordingly, the linearly long intake ducts 110 can be disposed by effectively utilizing the dead space created by being surrounded by the main frame 4, the vehicle-body cover 31, and the air cleaner 64. As a result, it is possible to simplify the structure of the intake ducts 110 and to reduce the intake resistance thereof.
In this case, since the intake ducts 110 do not meander, it is possible to simplify the structure of the intake ducts 110 as well as to reduce the intake resistance thereof as compared with a case where the intake ducts 110 are formed to have a meandering structure.
In addition, the rear end openings 110B of the intake ducts 110 are opened to the space S which is formed between the cylinder portion 26 of the horizontal engine and the main frame 4 and contains a small number of components of the vehicle (see Fig. 1 to Fig. 3). Accordingly, this arrangement makes it easy to take in the outside air.

In addition, since the upper surface 64X of the air cleaner 64 is inclined downward as the upper surface 64X extends away from the main frame 4 in the vehicle-width direction, a large space surrounded by the center tunnel cover 31D (the vehicle-body cover 31, the main frame 4, and the air cleaner 64 can be secured, so that the intake ducts 110 can be made to have a large diameter to reduce the intake resistance thereof.
Moreover, the upper surface 110X of each intake duct 110 is located below the upper surface of the main frame 4, and is inclined downward as the upper surface 110X extends away from the main frame 4 in the vehicle-width direction (see Fig. 11). For this reason, disposing the center tunnel cover 31D near the main frame 4 makes it possible to suppress an increase in size of the center tunnel cover 31D. This structure allows the rider (driver) to easily straddle the vehicle, and also makes it possible to reduce the width of the vehicle.

In addition, the intake ducts 110 are provided on the left and right sides of the vehicle-body center line L0, and the left and right intake ducts 110 have different duct lengths from each other. Moreover, the opening, in the air cleaner 64, of the connecting tube 63 leading to the throttle body is provided on the side of the vehicle-body center line L0 where the intake duct 110 having the longer duct length is disposed (see Fig. 12). For this reason, even when intake noise coming out from the opening of the connecting tube 63 is transmitted, while being not attenuated much in the air cleaner 64, to the intake duct 110 with the longer duct length on the left side which is close to the opening of the connecting tube 63, the intake noise can be reduced because of the long duct length. As a result, the amount of intake noise to leak out from the air cleaner 64 can be reduced.
Moreover, since the left and right intake ducts 110 have the duct lengths different from each other, each of the intake ducts 110 can be adjusted separately to have an effective duct length for a reduction of intake noise or the like. Also in the structure, as shown in Fig. 4, the space behind the intake duct 110 having a shorter duct length on the right side is utilized as a layout space for the ignition coil 71, which makes it possible to achieve an effective utilization of space.

In addition, in the structure, the air cleaner 64 has the blocking wall 81 extending around the air cleaner 64 in the front view of the vehicle body. This makes it possible to prevent dust coming from the front of the vehicle body from flowing rearward through the surroundings of the air cleaner 64. Since the intake ducts 110 extend rearward and downward along the upper surface 64X of the air cleaner 64 in the structure as described above, the rear end openings 110B of the intake duct 110 are located behind the air cleaner 64. For this reason, including the blocking wall 81 makes it possible to prevent dust flying from the front of the vehicle body from entering between the air cleaner 64 and the front side cover 31B, and also to prevent dust from entering between the air cleaner 64 and the cylinder portion 26. As a result, it is possible to make unlikely for the intake ducts 110 to take in dust.

In addition, in the structure, as shown in Fig. 3, a pair of left and right opening portions 31W for air vent are provided in the underside cover 31C covering the lateral sides of the front lower portion of the motorcycle 1. Specifically, the opening portions 31W are provided at positions overlapping the throttle body 62 below the respective intake ducts 110 in the side view. Accordingly, when traveling wind containing dust flows from the front of the vehicle body toward the throttle body 62, the traveling wind is allowed to be discharged to the outside of the vehicle through the opening portions 31W. This makes it further unlikely for dust from the front of the vehicle body to be taken in.

Although the present invention has been described so far on the basis of the embodiment, the present invention is not limited to the embodiment. In addition, description has been given in the above-described embodiment to the case where the present invention is applied to an intake structure of a motorcycle. However, the present invention is not limited to this case, and the present invention may be applied to an intake structure of any saddle-ride type vehicle such as a motorcycle of another different type. It should be noted that the saddle-ride type vehicles mentioned here are vehicles including any vehicle in general on which a rider straddles the vehicle body to ride, includes not only motorcycles (including motorized bicycles) but also three-wheeled vehicles and four-wheeled vehicles classified into ATVs (all-terrain vehicles), and also includes scooter-type vehicles having a low-floor-type foot-step
Fig. 1 is a left-side view showing a motorcycle according to an embodiment of a saddle-ride type vehicle of the present invention.
Fig. 2 is a left-side view showing an engine together with peripheral structure.
Fig. 3 is a right-side view showing the engine together with the peripheral structure.
Fig. 4 is a top view showing the engine together with the peripheral structure.
ig. 5 is a front view showing the engine together with the peripheral structure.
Fig. 6 is a perspective view showing an air cleaner together with peripheral structure as viewed from below a left side of a vehicle body.
Fig. 7 is a view showing part of an internal structure of the air cleaner as viewed from a left side.
Part (A) of Fig. 8 is a front view of a case main body of the air cleaner, and Part (B) of Fig. 8 is a left-side view.
Part (A) of Fig. 9 is a side view of a left intake duct, Part (B) of Fig. 9 is a view seen from a front end opening side, Part (C) of Fig. 9 is a view seen from a rear end opening side, and Part (D) of Fig. 9 is a top view.
Part (A) of Fig. 10 is a side view of a right intake duct, Part (B) of Fig. 10 is a view thereof seen from a front end opening side, Part (C) of Fig. 10 is a view thereof seen from a rear end opening side, and Part (D) of Fig. 10 is a top view thereof.
Fig. 11 is a cross-sectional view schematically showing the intake duct together with peripheral structure with the air cleaner attached to the vehicle.
Fig. 12 shows the air cleaner together with peripheral structure with a case cover detached from the air cleaner.

- 1: motorcycle
- 2: vehicle-body frame
- 3: head pipe
- 4: main frame
- 20: engine (internal combustion engine, horizontal engine)
- 31: vehicle-body cover
- 31A: front cover
- 31B: front side cover (side cover)
- 31C: underside cover (side cover)
- 61: intake pipe
- 62: throttle body
- 63: connecting tube
- 64: air cleaner
- 65: resonator
- 81: blocking wall
- 82: first blocking wall
- 84: second blocking wall
- 92A: intake opening
- 110: intake duct
- L0: vehicle-body center line

## Claims

1. A saddle-ride type vehicle comprising:
a main frame (4) extending obliquely rearward and downward from a head pipe (3);
an engine (20) supported on the main frame (4);
a vehicle-body cover (31) covering upper and lateral sides of the main frame (4); and
an air cleaner (64) attached to the main frame (4) near the head pipe (3), **characterized in that**
a pair of left and right intake ducts (110) provided on each of left and right sides of a vehicle-body center line (L0) are respectively attached to a pair of left and right outside-air inlets (92A) of the air cleaner (64), each intake duct (110) extends linearly toward the rear of the vehicle along the main frame (4) in a space surrounded by the vehicle-body cover (31), the main frame (4), and the air cleaner (64);
the intake ducts (110) on the respective left and right sides have different duct
lengths from each other and
an opening (63A), in the air cleaner (64), of a connecting tube (63) leading to a throttle body (62) is provided on the one of the sides of the vehicle-body center line (L0) where the intake duct (110) having the longer duct length is disposed.

2. The saddle-ride type vehicle according to claim 1, wherein
the engine (20) includes a cylinder (23) disposed substantially horizontally in such a
manner as to extend frontward from a crankcase (22), and
an opening (110B) of each intake duct (110) is opened in a space formed between the main frame (4) and the cylinder (23) in a side view.

3. The saddle-ride type vehicle according to any one of claims 1 and 2, wherein an upper surface (64X) of the air cleaner (64) is inclined downward as the upper surface (64X) of the air cleaner (64) extends away from the main frame (4) in a vehicle-width direction.

4. The saddle-ride type vehicle according to any one of claims 1 to 3, wherein an upper surface (110X) of each intake duct (110) is located below an upper surface of the main frame (4), and is inclined downward as the upper surface (110X) of each intake duct (110) extends away from the main frame (4) in a vehicle-width direction.

## Patentansprüche

1. Fahrzeug vom Sattelfahrtyp aufweisend:
einen Hauptrahmen (4), der sich von einem Kopfrohr (3) schräg nach hinten und unten erstreckt;
einen Motor (20), der von dem Hauptrahmen (4) getragen wird;
eine Fahrzeugkörperabdeckung (31), die die oberen und seitlichen Seiten des Hauptrahmens (4) abdeckt; und
einen Luftfilter (64), der an dem Hauptrahmen (4) nahe dem Kopfrohr (3) befestigt ist;
**dadurch gekennzeichnet, dass**
ein Paar von linken und rechten Einlasskanälen (110) des Luftfilters (64), die auf den linken und rechten Seiten der Fahrzeugkörpermittellinie (L0) vorgesehen sind, an einem Paar von linken und rechten Umgebungslufteinlässen (92a) befestigt sind, wobei jeder Einlasskanal (110) sich geradlinig zum hinteren Teil des Fahrzeugs entlang des Hauptrahmens (4) in einem Raum erstreckt, der von der Fahrzeugkörperabdeckung (31), dem Hauptrahmen (4) und dem Luftfilter (64) umgeben ist;
die Einlasskanäle (110) der jeweiligen linken und rechten Seite voneinander unterschiedliche Kanallängen haben, und
eine Öffnung (63a) in dem Luftfilter (64) einer Verbindungsröhre (63), die zu einem Drosselkörper (62) führt, an einer der Seiten der Fahrzeugkörpermittellinie (L0) vorgesehen ist, wo der Einlasskanal (110) verläuft, der die größere Kanallänge aufweist.

2. Fahrzeug vom Sattelfahrtyp gemäß Anspruch 1, wobei
der Motor (20) einen Zylinder (23) umfasst, der im Wesentlichen horizontal in so einer Weise angeordnet ist, um von einem Kurbelgehäuse (22) sich vorwärts zu erstrecken, und
eine Öffnung (110B) jedes Einlasskanals (110) in einem Raum geöffnet ist, der zwischen dem Hauptrahmen (4) und dem Zylinder (23) in einer Seitenansicht ausgebildet ist.

3. Fahrzeug vom Sattelfahrtyp gemäß einem der Ansprüche 1 und 2, wobei eine obere Fläche (64X) des Luftfilters (64) so wie sich die obere Fläche (64x) des Luftfilters (64) von dem Hauptrahmen (4) weg hin der Fahrzeugbreitenrichtung erstreckt, nach unten geneigt ist.

4. Fahrzeug vom Sattelfahrtyp gemäß einem der Ansprüche 1 bis 3, wobei eine obere Fläche (110X) von jedem Einlasskanal (110) unter einer oberen Fläche des Hauptrahmens (4) positioniert ist und wie die obere Fläche (110X) von jeden Einlasskanal (110) sich von dem Hauptrahmen (4) in der Fahrzeugbreitenrichtung erstreckt, nach unten geneigt ist.

## Revendications

1. Véhicule de type à selle comprenant :
un cadre principal (4) s'étendant de manière oblique vers l'arrière et vers le bas à partir d'une tubulure de refoulement (3) ;
un moteur (20) supporté sur le cadre principal (4) ;
un couvercle de carrosserie de véhicule (31) recouvrant les côtés supérieur et latéral du cadre principal (4) ; et
un filtre à air (64) fixé au cadre principal (4) à proximité de la tubulure de refoulement (3),
**caractérisé en ce que**
une paire de conduits d'admission gauche et droit (110) prévus sur chacun des côtés gauche et droit d'un axe central de carrosserie de véhicule (L0) sont respectivement fixés sur une paire d'entrées d'air extérieur gauche et droite (92A) du filtre à air (64), chaque conduit d'admission (110) s'étend de manière linéaire vers l'arrière du véhicule le long du cadre principal (4) dans un espace entouré par le couvercle de carrosserie du véhicule (31), le cadre principal (4) et le filtre à air (64) ;
les conduits d'admission (110) sur les côtés gauche et droit respectifs ont différentes longueurs de conduit l'une par rapport à l'autre, et
une ouverture (63A), dans le filtre à air (64), d'un tube de raccordement (63) menant à un corps de papillon des gaz (62), est prévue sur le premier des côtés de l'axe central de carrosserie de véhicule (L0) où le conduit d'admission (110) ayant la longueur de conduit la plus longue est disposé.

2. Véhicule de type à selle selon la revendication 1, dans lequel
le moteur (20) comprend un cylindre (23) disposé de manière sensiblement horizontale afin de s'étendre vers l'avant à partir d'un carter de moteur (22) ; et
une ouverture (110B) de chaque conduit d'admission (110) est ouverte dans une espace formé entre le cadre principal (4) et le cylindre (23), sur une vue latérale.

3. Véhicule de type à selle selon l'une quelconque des revendications 1 et 2, dans lequel la surface supérieure (64x) du filtre à air (64) est inclinée vers le bas lorsque la surface supérieure (64x) du filtre à air (64) s'étend à distance du cadre principal (4) dans le sens de la largeur du véhicule.

4. Véhicule de type à selle selon l'une quelconque des revendications 1 à 3, dans lequel la surface supérieure (100x) de chaque conduit d'admission (110) est positionnée au-dessous d'une surface supérieure du cadre principal (4), et est inclinée vers le bas lorsque la surface supérieure (110x) de chaque conduit d'admission (110) s'étend à distance du cadre principal (4) dans le sens de la largeur du véhicule.
